# EUROPEAN PATENT APPLICATION

(11) **EP 4 120 238 A1**
(43) Date of publication of application: **18.01.2023**
(21) Application number: 22184374.1
(22) Date of filing: 12.07.2022
(51) Int. Cl.: G09G 5/391, G06F 3/147, G09G 3/20, G09G 5/00

(54) **VIDEO PROCESSING AND PLAYBACK SYSTEMS AND METHODS**

(30) Priority: 16.07.2021 GB 202110261; 08.02.2022 GB 202201605
(71) Applicant: Sony Interactive Entertainment Inc., Tokyo 108-0075 (JP)
(72) Inventor: KAVALLIEROU, Michael, London, W1F 7LP (GB); GUPTA, Rajeev, London, W1F 7LP (GB); UBERTI, David, London, W1F 7LP (GB); SMITH, Aexander, London, W1F 7LP (GB)
(74) Representative: D Young & Co LLP

(57) **Abstract**

A video processing method for a circular panoramic video recording comprising an original field of view region at a first resolution and a further peripheral region outside the original field of view at a second, lower resolution, the method comprising the steps of performing spatial upscaling of the further peripheral region to a resolution higher than the second resolution.

## Description

### BACKGROUND OF THE INVENTION

### Field of the invention

The present invention relates to video processing and playback systems and methods.

Traditional videogame streaming systems such as Twitch^{®} and other video hosting platforms such as YouTube^{®} or Facebook^{®} enable players of videogames to broadcast play of these games to a wide audience.

A notable difference between playing a videogame and watching a video recording of such gameplay is the passive nature of the experience, both in terms of decisions made in-game and also the viewpoint of the player (determined for example by player inputs).

This latter issue is more acute when the videogame in question is a VR or AR game, where typically a player of the game determines the viewpoint based at least in part on their own head or eye movements. Hence when watching such a VR or AR game as a live or recorded stream, the recorded images will be tracking the broadcaster's head and/or eye movements, and not the viewer's. This can lead to nausea for the viewer, and also may be frustrating if they wanted to look in a different direction to the broadcast player.

The present invention seeks to mitigate or alleviate this problem.

### SUMMARY OF THE INVENTION

Various aspects and features of the present invention are defined in the appended claims and within the text of the accompanying description and include at least in a first aspect, a method of video processing; in another aspect, a method of viewing a video recording; in a further aspect, a video processing system; and in a yet further aspect, a video playback system.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 schematically illustrates an HMD worn by a user;
- Figure 2 is a schematic plan view of an HMD;
- Figure 3 schematically illustrates the formation of a virtual image by an HMD;
- Figure 4 schematically illustrates another type of display for use in an HMD;
- Figure 5 schematically illustrates a pair of stereoscopic images;
- Figure 6a schematically illustrates a plan view of an HMD;
- Figure 6b schematically illustrates a near-eye tracking arrangement;
- Figure 7 schematically illustrates a remote tracking arrangement;
- Figure 8 schematically illustrates a gaze tracking environment;
- Figure 9 schematically illustrates a gaze tracking system;
- Figure 10 schematically illustrates a human eye;
- Figure 11 schematically illustrates a graph of human visual acuity;
- Figures 12a and 12b schematically illustrate foveated rendering;
- Figures 13a and 13b schematically illustrate resolution transition;
- Figures 14a and 14b schematically illustrate a an extended rendering scheme in accordance with embodiments of the present application;
- Figure 15 is a flow diagram of a method of video processing in accordance with embodiments of the present application; and
- Figure 16 is a flow diagram of a method of video playback in accordance with embodiments of the present application.

### DESCRIPTION OF THE EMBODIMENTS

Video recording and playback systems and methods are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

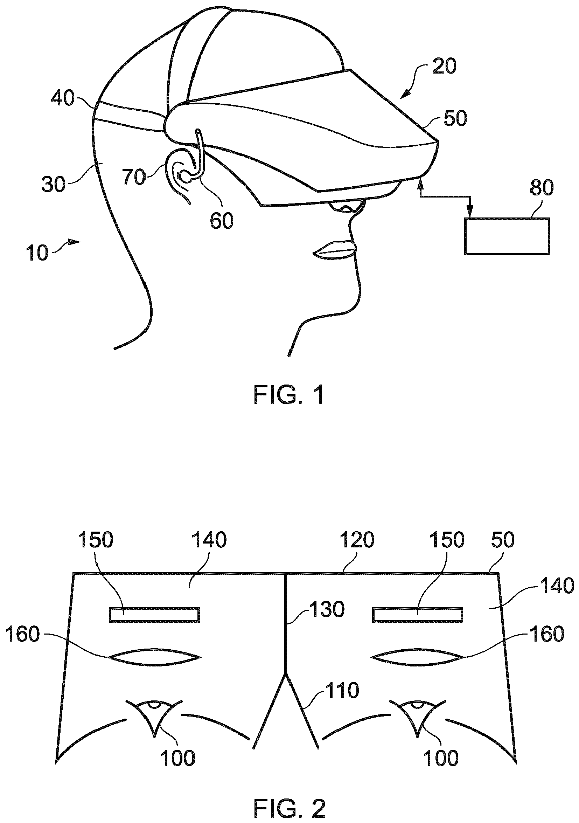

Referring now to the drawings, wherein like reference numerals designate identical or corresponding parts throughout the several views, in Figure 1 a user 10 is wearing an HMD 20 (as an example of a generic head-mountable apparatus - other examples including audio headphones or a head-mountable light source) on the user's head 30. The HMD comprises a frame 40, in this example formed of a rear strap and a top strap, and a display portion 50.

Optionally the HMD has associated headphone audio transducers or earpieces 60 which fit into the user's left and right ears 70. The earpieces 60 replay an audio signal provided from an external source, which may be the same as the video signal source which provides the video signal for display to the user's eyes.

In operation, a video signal is provided for display by the HMD. This could be provided by an external video signal source 80 such as a video games machine or data processing apparatus (such as a personal computer), in which case the signals could be transmitted to the HMD by a wired or a wireless connection 82. Examples of suitable wireless connections include Bluetooth^{®} connections. Audio signals for the earpieces 60 can be carried by the same connection. Similarly, any control signals passed from the HMD to the video (audio) signal source may be carried by the same connection. Furthermore, a power supply 83 (including one or more batteries and/or being connectable to a mains power outlet) may be linked by a cable 84 to the HMD.

Accordingly, the arrangement of Figure 1 provides an example of a head-mountable display system comprising a frame to be mounted onto an observer's head, the frame defining one or two eye display positions which, in use, are positioned in front of a respective eye of the observer and a display element mounted with respect to each of the eye display positions, the display element providing a virtual image of a video display of a video signal from a video signal source to that eye of the observer. Figure 1 shows just one example of an HMD. Other formats are possible: for example an HMD could use a frame more similar to that associated with conventional eyeglasses.

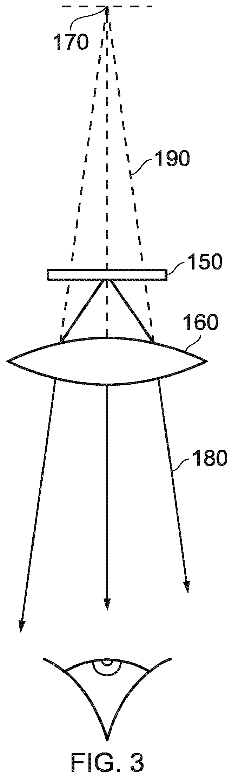

In the example of Figure 1, a separate respective display is provided for each of the user's eyes. A schematic plan view of how this is achieved is provided as Figure 2, which illustrates the positions 100 of the user's eyes and the relative position 110 of the user's nose. The display portion 50, in schematic form, comprises an exterior shield 120 to mask ambient light from the user's eyes and an internal shield 130 which prevents one eye from seeing the display intended for the other eye. The combination of the user's face, the exterior shield 120 and the interior shield 130 form two compartments 140, one for each eye. In each of the compartments there is provided a display element 150 and one or more optical elements 160. The way in which the display element and the optical element(s) cooperate to provide a display to the user will be described with reference to Figure 3.

Referring to Figure 3, the display element 150 generates a displayed image which is (in this example) refracted by the optical elements 160 (shown schematically as a convex lens but which could include compound lenses or other elements) so as to generate a virtual image 170 which appears to the user to be larger than and significantly further away than the real image generated by the display element 150. In Figure 3, solid lines (such as the line 180) are used to denote real optical rays, whereas broken lines (such as the line 190) are used to denote virtual rays.

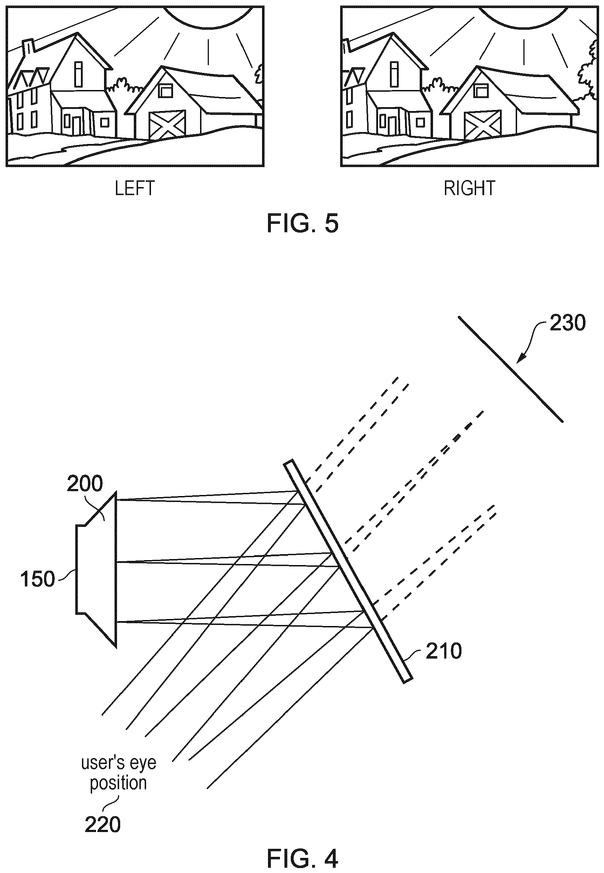

An alternative arrangement is shown in Figure 4, where the display element 150 and optical elements 200 cooperate to provide an image which is projected onto a mirror 210, which deflects the image towards the user's eye position 220. The user perceives a virtual image to be located at a position 230 which is in front of the user and at a suitable distance from the user.

In the case where separate respective displays are provided for each of the user's eyes, it is possible to display stereoscopic images. An example of a pair of stereoscopic images for display to the left and right eyes is shown in Figure 5.

In some uses of the HMD, such as those associated with virtual reality (VR) systems, the user's viewpoint should track movements with respect to a space in which the user is located.

This tracking may employ head and/or gaze tracking. Head tracking is carried out by detecting motion of the HMD and varying the apparent viewpoint of the displayed images so that the apparent viewpoint tracks the motion. The motion tracking can use any suitable arrangement including hardware motion detectors (such as accelerometers or gyroscopes), external cameras operable to image the HMD, and outwards-facing cameras mounted onto the HMD.

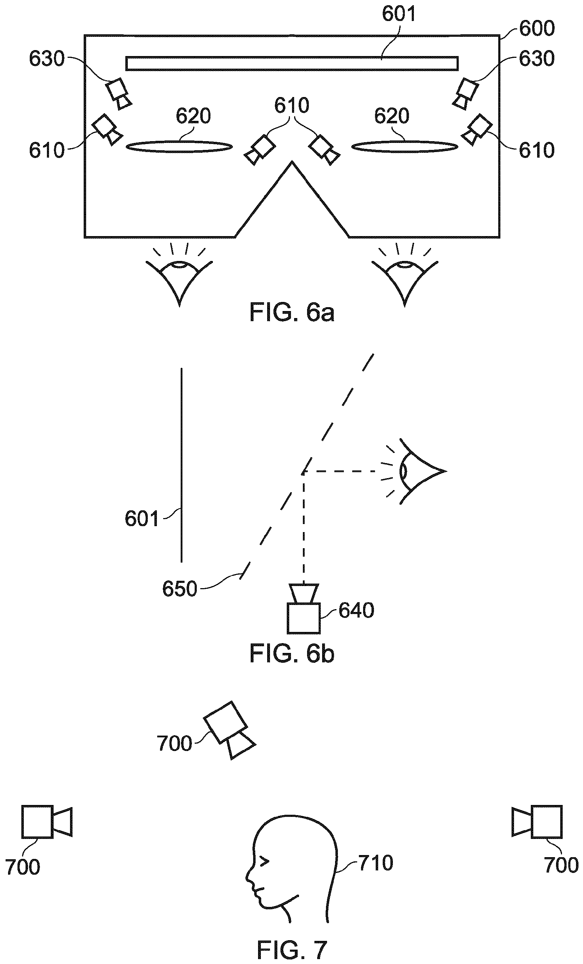

For gaze tracking, Figures 6a and 6b schematically illustrates two possible arrangements.

Figure 6a shows an example of a gaze tracking arrangement in which the cameras are arranged within an HMD so as to capture images of the user's eyes from a short distance. This may be referred to as near-eye tracking, or head-mounted tracking. In this example, an HMD 600 (with a display element 601) is provided with cameras 610 that are each arranged so as to directly capture one or more images of a respective. Four cameras 610 are shown here as examples of possible positions that eye-tracking cameras may provided, though typically one camera per eye may be considered preferable. Optionally, only one eye may be tracked, on the assumption that eye motion is normally consistent between both eyes. One or more such cameras may be positioned so as to include the lens 620 in the optical path used to capture images of the eye. Examples of such positions are shown by the cameras 630. An advantage of including the lens within the optical path may be that of simplifying the physical constraints upon the design of an HMD, for example.

Figure 6b shows an example of a gaze tracking arrangement in which the cameras are instead arranged so as to indirectly capture images of the user's eyes. Figure 6b includes a mirror 650 arranged between a display 601 and the viewer's eye (or eyes). For the sake of clarity, any additional optics (such as lenses) are omitted in this Figure. The mirror 650 in such an arrangement is selected so as to be partially transmissive; that is, the mirror 650 should be selected so as to enable the camera 640 to obtain an image of the user's eye while the user views the display 601. One method of achieving this is to provide a mirror 650 that is reflective to IR wavelengths but transmissive to visible light - this enables IR light used for tracking to be reflected from the user's eye towards the camera 640 while the light emitted by the display 601 passes through the mirror uninterrupted. Such an arrangement may be advantageous in that the cameras may be more easily arranged out of view of the user, for instance. Further to this, improvements to the accuracy of the eye tracking may be obtained due to the fact that the camera captures images from a position that is effectively (due to the reflection) along the axis between the user's eye and the display.

Alternatively, eye-tracking arrangements need not be implemented in a head-mounted or otherwise near-eye fashion as has been described above. For example, Figure 7 schematically illustrates a system in which a camera is arranged to capture images of the user from a distance. In Figure 7, an array of cameras 700 is provided that together provide multiple views of the user 710. These cameras are configured to capture information identifying at least the direction in which a user's 710 eyes are focused, using any suitable method.

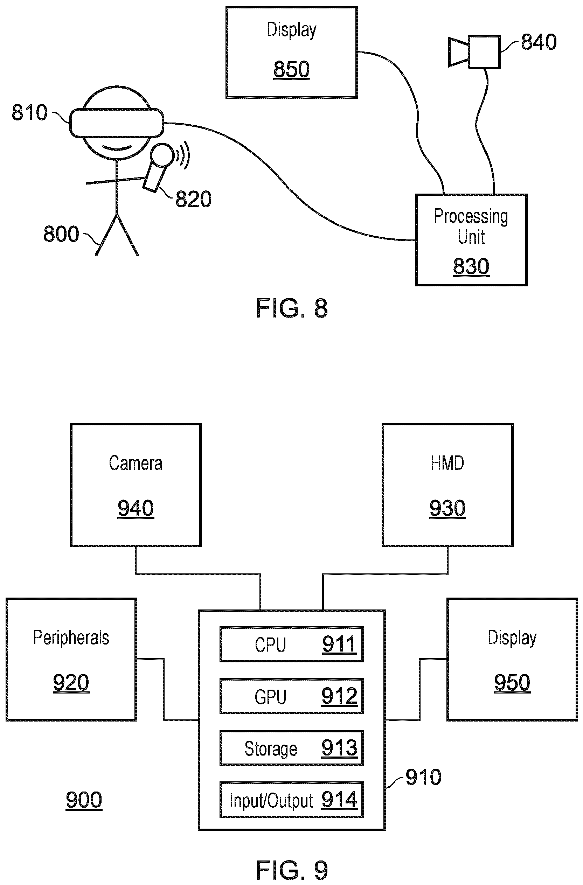

Figure 8 schematically illustrates an environment in which an eye-tracking process may be performed. In this example, the user 800 is using an HMD 810 that is associated with the processing unit 830, such as a games console, with the peripheral 820 allowing a user 800 to input commands to control the processing. The HMD 810 may perform eye tracking in line with an arrangement exemplified by Figure 6a or 6b, for example - that is, the HMD 810 may comprise one or more cameras operable to capture images of either or both of the user's 800 eyes. The processing unit 830 may be operable to generate content for display at the HMD 810; although some (or all) of the content generation may be performed by processing units within the HMD 810.

The arrangement in Figure 8 also comprises a camera 840, located outside of the HMD 810, and a display 850. In some cases, the camera 840 may be used for performing tracking of the user 800 while using the HMD 810, for example to identify body motion or a head orientation. Meanwhile in alternative arrangements, the camera 840 may instead be mounted on the HMD facing outward, to determine HMD motion based on motion within the captured video.

The processing required to generate tracking information from captured images of the user's 800 eye or eyes may be performed locally by the HMD 810, or the captured images or results of one or more detections may be transmitted to an external device (such as a the processing unit 830) for processing. In the former case, the HMD 810 may output the results of the processing to the external device.

Figure 9 schematically illustrates a system for performing one or more eye tracking and head tracking processes , for example in system such as that discussed above with reference to Figure 8. The system 900 comprises a processing device 910, one or more peripherals 920, an HMD 930, a camera 940, and a display 950.

As shown in Figure 9, the processing device 910 may comprise one or more of a central processing unit (CPU) 911, a graphics processing unit (GPU) 912, storage (such as a hard drive, or any other suitable data storage medium) 913, and an input/output 914. These units may be provided in the form of a personal computer, a games console, or any other suitable processing device.

For example, the CPU 911 may be configured to generate tracking data from one or more input images of the user's eyes from one or more cameras, or from data that is indicative of a user's eye direction. This may be data that is obtained from processing images of the user's eye at a remote device, for example. Of course, should the tracking data be generated elsewhere then such processing would not be necessary at the processing device 910.

Alternatively or in addition, one or more cameras (other than a gaze tracking camera) may be used to track head motion as described elsewhere herein, as may any other suitable motion tracker such as an accelerometer within the HMD, as described elsewhere herein.

The GPU 912 may be configured to generate content for display to the user on which the eye and/or head tracking is being performed.

The content itself may be modified in dependence upon the tracking data that is obtained - an example of this is the generation of content in accordance with a foveal rendering technique. Of course, such content generation processes may be performed elsewhere - for example, an HMD 930 may have an on-board GPU that is operable to generate content in dependence upon the eye tracking and/or head motion data.

The storage 913 may be provided so as to store any suitable information. Examples of such information include program data, content generation data, and eye and/or head tracking model data. In some cases, such information may be stored remotely such as on a server, and so storage 913 may be local or remote, or a combination of the two.

Such storage may also be used to record the generated contact, as discussed elsewhere herein.

The input/output 914 may be configured to perform any suitable communication as appropriate for the processing device 910. Examples of such communication include the transmission of content to the HMD 930 and/or display 950, the reception of eye-tracking data, head tracking data, and/or images from the HMD 930 and/or the camera 940, and communication with one or more remote servers (for example, via the internet).

As discussed elsewhere, the peripherals 920 may be provided to allow a user to provide inputs to the processing device 910 in order to control processing or otherwise interact with generated content. This may be in the form of button presses or the like, or alternatively via tracked motion to enable gestures to be used as inputs.

The HMD 930 may be configured in accordance with the discussion of the corresponding elements above with respect to Figure 2. The camera 940 and display 950 may be configured in accordance with the discussion of the corresponding elements above with respect to Figure 8.

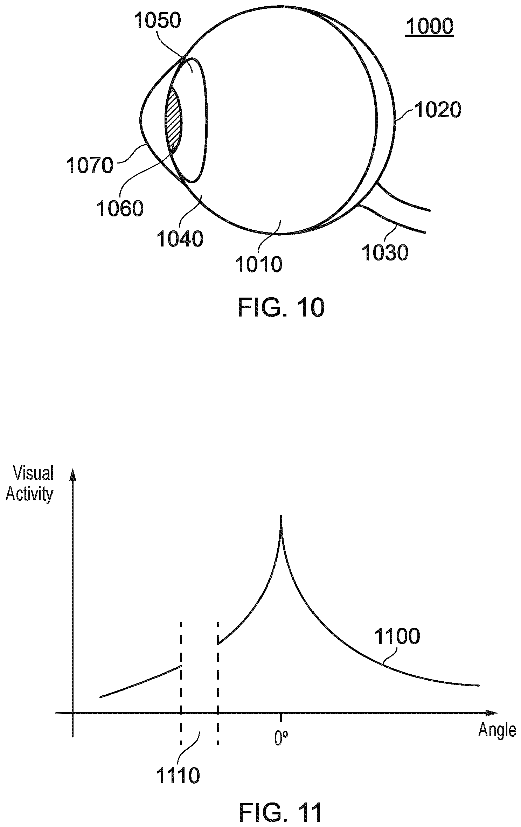

Referring now to Figure 10, it will be understood that the human eye does not have a uniform structure; that is, the eye is not a perfect sphere, and different parts of the eye have different characteristics (such as varying reflectance or colour). Figure 10 shows a simplified side view of the structure of a typical eye 1000; this Figure has omitted features such as the muscles which control eye motion for the sake of clarity.

The eye 1000 is formed of a near-spherical structure filled with an aqueous solution 1010, with a retina 1020 formed on the rear surface of the eye 1000. The optic nerve 1030 is connected at the rear of the eye 1000. Images are formed on the retina 1020 by light entering the eye 1000, and corresponding signals carrying visual information are transmitted from the retina 1020 to the brain via the optic nerve 1030.

Turning to the front surface of the eye 1000, the sclera 1040 (commonly referred to as the white of the eye) surrounds the iris 1050. The iris 1050 controls the size of the pupil 1060, which is an aperture through which light enters the eye 1000. The iris 1050 and pupil 1060 are covered by the cornea 1070, which is a transparent layer which can refract light entering the eye 1000. The eye 1000 also comprises a lens (not shown) that is present behind the iris 1050 that may be controlled to adjust the focus of the light entering the eye 1000.

The structure of the eye is such that there is an area of high visual acuity (the fovea), with a sharp drop off either side of this. This is illustrated by the curve 1100 of Figure 11, with the peak in the centre representing the foveal region. The area 1110 is the 'blind spot'; this is an area in which the eye has no visual acuity as it corresponds to the area where the optic nerve meets the retina. The periphery (that is, the viewing angles furthest from the fovea) is not particularly sensitive colour or detail, and instead is used to detect motion.

As also described elsewhere herein, foveal rendering (or foveated rendering) is a rendering technique that takes advantage of the relatively small size (around 2.5 to 5 degrees) of the fovea and the sharp fall-off in acuity outside of that.

Conventional techniques for foveated rendering typically require multiple render passes to allow an image frame to be rendered multiple times at different image resolutions so that the resulting renders are then composited together to achieve regions of different image resolution in an image frame. The use of multiple render passes requires significant processing overhead and undesirable image artefacts can arise at the boundaries between the regions.

Alternatively, in some cases hardware can be used that allows rendering at different resolutions in different parts of an image frame without needing additional render passes (so called flexible scale rasterization). Such hardware-accelerated implementations may therefore be better in terms of performance when such hardware is available for use.

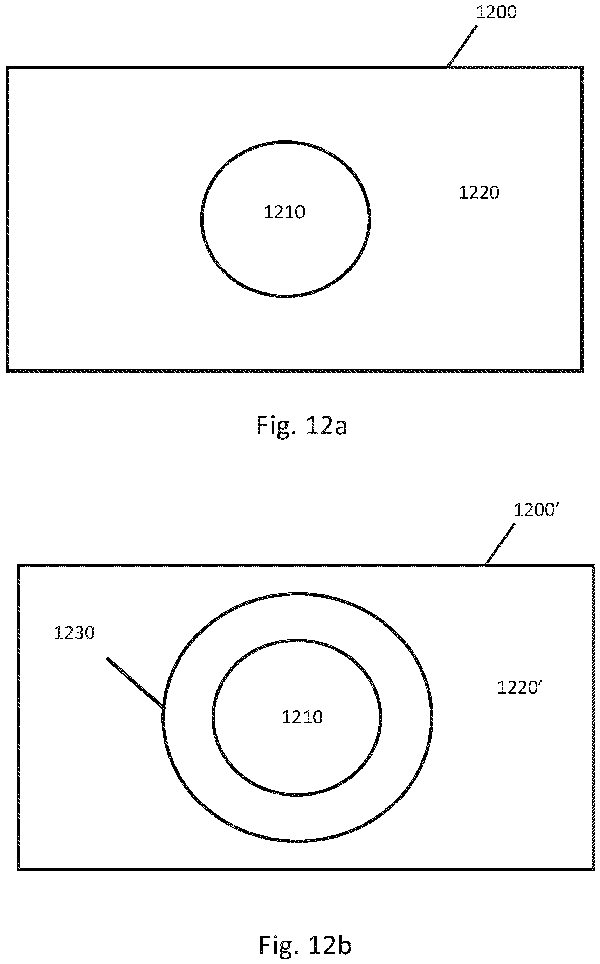

Turning now to figure 12a, this schematically illustrates foveated rendering for a displayed scene 1200. The user gazes in the direction of a region of interest to them. The direction of gaze is tracked as described elsewhere herein and in this case for the purposes of illustration is directed at the centre of the displayed field of view. Consequently an area 1210 roughly corresponding to the high resolution fovea region of the user's eyes is rendered at a high resolution, whilst a peripheral area 1220 is rendered at a lower resolution. Because of the gaze tracking, the high-resolution region of the image is projected onto the high acuity fovea region of the user's eye, whilst the lower resolution regions of the image are projected onto the lower acuity regions of the user's eye. By continually tracking the user's gaze and rendering in this manner, the user is fooled into thinking that the entire image is high-resolution, because it always appears to be within the high-resolution portion of the user's own vision. However in fact typically the majority of the image is actually being rendered at a lower resolution. In this way the computational overhead of rendering the complete image can be greatly reduced.

This can be beneficial for several reasons. Firstly for the same computational budget, richer, more complex and/or more detailed graphics can be presented to the user then previously, and / or for the same computational budget, rather than rendering a single image (such as may be displayed on a television), it becomes possible to render two images (for example a left and right image forming a stereoscopic pair for a head mounted display). Secondly, the amount of data to be transmitted to a display such as the HMD can be reduced, and optionally any post-processing of the image(s) at the HMD (such as for example re-projection) may also be computationally less expensive.

Turning now to figure 12b, in recognition of the fact that the drop off in visual acuity from the fovea area of the eye is a smooth progression as seen in figure 11, optionally foveated rendering can implement a multi-step or graded change in resolution between the fovea region and the peripheral region of the image.

Hence for a variant rendering of the displayed scene 1200', the foveal area 1210 is surrounded by a transition region 1230 disposed between the fovea region and a reduced peripheral region 1220'.

This transition region may be rendered at an intermediate resolution between the resolution of the fovea region and the resolution of the peripheral region.

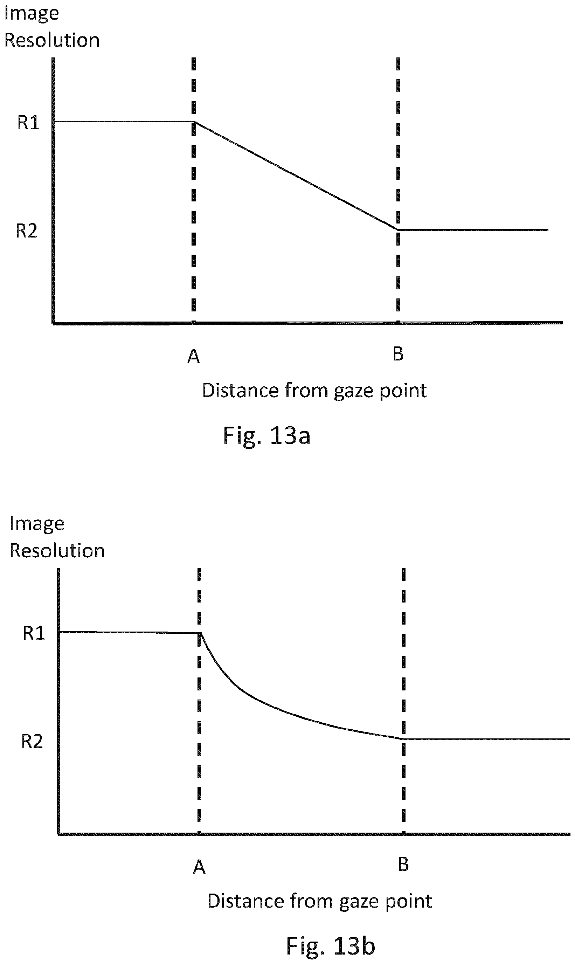

Referring now also to figures 13a and 13b, alternatively it may be rendered as a function of distance from the estimated gaze position. This may be achieved for example using a pixel mask with increasingly sparse pixels as a function of distance that indicate the corresponding image pixel should be rendered, with remaining pixels filled in blended according to nearby rendered colours. Alternatively may be achieved by a suitable resolution distribution curve, in a flexible scale rasterisation system. Figure 13a shows a linear progression between resolutions, whilst figure 13 B shows a nonlinear progression chosen to echo the nonlinear reduction in acuity away from the fovea in the users eye. The second approach reduces the resolution slightly more quickly, thereby saving slightly more computational overhead.

Hence will be appreciated that where gaze tracking is made possible (for example by use of one or more gaze tracking cameras and subsequent computation of the direction of gaze of the user and hence the position of gaze on the virtual image), then optionally foveated rendering may be employed either to maintain the illusion of high-resolution images whilst reducing computationally overhead of image production, increasing the available image quality at least in the foveated region, and/or providing a second viewpoint (for example to generate a stereoscopic pair) for less than double the cost of generating two conventional images.

Furthermore, when wearing an HMD, it will be appreciated that if the gaze region 1210 is the displayed region of most interest based on eye gaze, then the overall rendered scene 1200 is the displayed region of general interest based on head position; that is to say, the displayed field of view 1200 is responsive to the user's head position whilst wearing the HMD, whilst any foveated rendering within that field of view is responsive to the user's gaze position.

In effect the further periphery outside the displayed field of view 1200 can be thought of as being rendered in the special case of a resolution of zero (i.e. not actually rendered), since normally it is impossible for the user to see outside the displayed field of view.

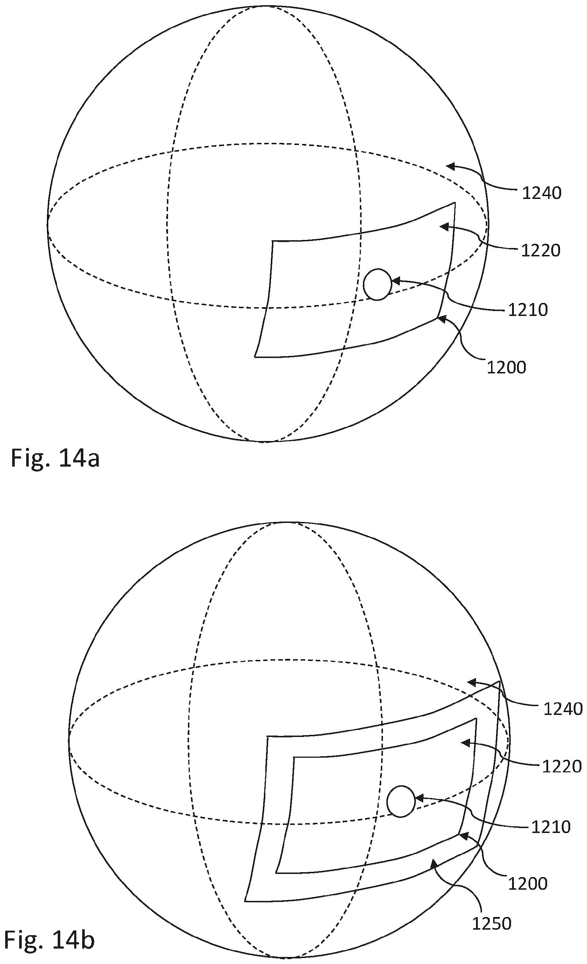

However, in the event that a second person wishes to look at a recording of gameplay of the user, by wearing an HMD of their own, whilst they may well look at the same content as the original user (i.e. in the same direction), this is not guaranteed. Therefore in an embodiment of the description, and referring now to Figure 14a, the principle of foveated rendering can be extended to a region beyond the field of view 1200 displayed to the original user, in order to render a yet lower resolution view of the further peripheral outside the original user's field of view. This lower resolution view will not normally be seen by the original user (since they are only presented with the current field of view 1200), but may nevertheless be rendered using the same techniques used for foveated rendering within the current field of view, as part of the same rendering pipeline.

Hence in practice the games machine or other rendering source now renders a superset of the displayed image 1200. Optionally, it renders a high resolution foveal region 1210. It then renders a peripheral region 1220 within the field of view displayed to the user, optionally with a transitional region 1230 (not shown in figure 14a), and then a further peripheral region 1240, outside the field of view displayed to the user.

This further peripheral region is typically a sphere (or more precisely, completes a sphere) notionally centred at the user's head, and is rendered at a lower resolution than the peripheral region 1220 within the field of view displayed to the user.

Referring now to figure 14b, optionally, in a manner similar to the transitional region shown in figure 12b, a further transitional region 1250 may be implemented in a region around the field of view displayed to the user in which the resolution of the peripheral region 1220 within the field of view displayed to the user is ramped down to a lower resolution for the spherical further peripheral region. Again this may be an intermediate resolution or a linear or non-linear ramp. The relative size of the further transitional region may be a matter of design choice, or may be determined empirically; for example viewers of a recording of the original user who wish to track the original users head movements (typically because the original user was tracking objects or events of interest within the game) may not perfectly track the originally displayed field of view due to finite reaction times. Consequently the size of the transitional region may be chosen based on the comparative lag in tracking the field of view displayed to the user as it moves around a notional sphere. This lag in turn may be a function of the size and speed of movement of the field of view; hence for example if the original user moves their head quickly and/or a large distance, the transitional region 1250 may optionally be temporarily larger, the size being a function of the speed and/or distance, and optionally also a function of overall available computational budget (in this case, optionally the resolution of the remainder of spherical further region may be temporarily reduced to maintain an overall computational budget). Conversely, when the original user's field of view is relatively fixed, the transitional region may be relatively small, for example sufficient to accommodate micro-movements of subsequent viewer's heads, and/or to accommodate different (and possibly larger) fields of view of subsequent head mounted displays (for example, where a recording was created using a first-generation head mounted display with a field of view of 110°, the transitional region may try to extend to 120° in anticipation of a second generation head mounted display with a wider field of view).

The spherical image may be rendered for example as a cube map, or using any other suitable technique for spherical scene rendering, within the rendering pipeline.

As noted elsewhere herein, the original user only sees the displayed field of view 1200, itself optionally comprising a high resolution foveal region, an optional transitional region, and a peripheral region, or where for example the head mounted display does not comprise gaze tracking, then a displayed field of view with a predetermined resolution. The remainder of the rendered spherical image is not seen by the original user, and is rendered at a lower resolution, optionally with a transitional region between the displayed field of view and the remains of the sphere.

In this rendering scheme therefore the displayed field of view can be thought of as a head based foveated rendering scheme rather than a gaze based foveated rendering scheme, with the comparatively high resolution displayed field of view moving around the overall rendered sphere as the user moves their head whilst optionally the same time a higher resolution region moves around within the displayed field of view as the user moves their gaze. The original user only sees the displayed field of view, but subsequent viewers of the recording of the rendered image have potential access to the entire sphere independent of the original user's displayed field of view within that sphere.

Hence whilst typically they may attempt to track the user's displayed field of view, they are free to look elsewhere within the spherical image to either enjoy the surroundings, look at something that the original user was not interested in, or simply obtain a greater sense of immersion when their own current field of view does not exactly align with that of the original user.

The full image (being a spherical superset of the image displayed to the original user) may be recorded for example in a circular buffer, in a similar manner to how a conventional displayed image may be recorded in a circular buffer of a games machine. For example a hard disk, solid state disk, and/or RAM of the games machine may be used to record 1, 5, 15, 30, or 60 minutes of footage of the full image, with new footage overwriting the oldest footage unless the user specifically indicates they wish to save/archive recorded material, in which case it may be duplicated to a separate file in the hard disc or solid state disk, or uploaded to a server. Similarly the full image may be broadcast live by being uploaded to a broadcast distribution server, or may be broadcast or uploaded from the circular buffer or from a saved file at a later time by similarly uploading to a broadcast or video distribution server.

The result is a spherical image in which a higher resolution region corresponds to the displayed field of view of the original user as they move their head around while wearing an HMD, and optionally within that high resolution region a still higher resolution region corresponds to the position of their gaze within that displayed field of view.

Optionally, metadata may be recorded with the spherical image, either as part of the video recording or as a companion file, which indicates where within the spherical image the displayed field of view is located. This may be used for example to assist a subsequent viewer; if a subsequent viewer gets disorientated or loses track of where the originally displayed field of view has moved (for example if watching a space battle and the original user's spaceship shoots out of view, they may be relatively few visible points of reference for a subsequent viewer to use to navigate towards where the spaceship - and the original users point of view - now is. In this case, a navigation tool such as an arrow pointing in the current direction of the originally displayed field of view, or a glow at the respective edge of the periphery of the subsequent viewers own field of view may guide them back towards the highest resolution parts of the recorded image.

In this way, a subsequent user may have the confidence to look around the scene knowing that they can find their way back to the originally displayed field of view, even if this changes position whilst they are looking away.

One possible reason for looking around the scene is that other events are occurring, or other objects exist within the virtual environment, that the original user was not attending to or was not interested in. A subsequent user may have more interest in these.

Accordingly, optionally the games machine (or a game or other application running thereon) may maintain a list, table or other associated data indicating an expected degree of interest in particular objects or environmental elements such as non-player characters, and/or maintain similar data indicating an expected degree of interest in particular events, such as the appearance of an object or character, or an explosion, or part of a scripted event that is tagged to be of likely interest.

In such cases, where such objects or events occur within the spherical image outside the displayed field of view of the original user, the area within the spherical image corresponding to such an object or event may itself be rendered at a comparatively higher resolution (for example resolution corresponding to partway through transitional region 1250, or originally displayed peripheral region 1220, optionally with other parts of the spherical image being rendered at a lower resolution to maintain an overall computational budget. Optionally the resolution boost may be made a function of a degree of interest associated with the object or event (for example no, low, or high interest objects or events may be boosted by nothing, a first or a second higher amount, respectively).

Such objects or events may also have a further transitional region similar to 1230 or 1250 around them to provide a visually smooth transition into the remaining spherical image. In this way, objects or events of interest not viewed by the original user may still be viewed by subsequent viewers, with an improved resolution relative to lower interest parts of the spherical image.

Optionally, the above scheme, whereby the principle of foveated rendering is extended past the field of view of the original user to add a further peripheral region or regions forming a sphere (or other circular panoramic, such as a cylinder), or similarly where (if true foveated rendering is not used, e.g. because there is no gaze tracking), then the principle is similarly applied outside the field of view of the original user, may be turned on or off by one or more of the user, the application generating the rendered environment, the operating system of the games console, or a helper app (e.g. an app dedicated to broadcast / streaming uploads).

For example, the above scheme(s) may be disabled by default, as they represent a computational overhead that is not needed if the current game play is not to be uploaded, streamed or broadcast. The scheme may then be provided as an option to the user to turn on if they intend to upload, broadcast or stream in this manner in future, or in response to an indication to commence a stream, broadcast, or upload.

Similarly, the game or app generating the rendered environment may activate the scheme, for example in response to in game events, or particular levels or cut-scenes, where it is considered more likely that an audience may wish to look around in different directions to the original user.

### Frame Rates

The above schemes increase computational overhead by requiring that more of the scene is rendered, albeit generally at a lower resolution than the scene within the field of view displayed to the original user.

To mitigate this, the part of the scene rendered outside the field of view displayed to the original user, or optionally outside a transition region 1250 bounding the originally displayed field of view, may be rendered at a lower frame rate than the field of view and optionally the transition region.

Hence for example the field of view may be rendered at 60 frames per second (fps), whilst the remainder of the sphere is rendered at 30 fps, optionally at a higher resolution than if rendered at 60 fps, if the computational budget allows.

Optionally, a server to which the resulting recording is uploaded may then interpolate the frames of the remainder of the sphere to boost the frame rate back up to 60 fps.

Hence more generally the remainder of the sphere (optionally including a transition region around the original field of view) is rendered at a fraction of the frame rate of the original displayed field of view (typically ½ or %), and this part of the image is then frame-interpolated, either by the games machine or by a server to which the recording is sent.

### Upscaling

Alternatively or in addition to separate temporal / frame interpolation to compensate for reduced frame rates, spatial upscaling may be used to compensate for reduced image resolution in the sphere. This may be achieved using offline processing e.g. at the games machine or server as above, or at a client device of a subsequent viewer of the content.

Suitable spatial upscaling techniques are well known and include bilinear and bicubic interpolation algorithms, sinc and Lanczos resampling algorithms, and the like.

Alternatively or in addition, a machine-learning (e.g. neural) rendering or in-painting technique could be used, such as a deep convolutional neural network trained to upscale images. In the present case, the machine-learning system could be trained to upscale by the proportional difference in resolution between the foveal (or field of view) resolution and the lower resolution (whether of the peripheral, further peripheral, or transitional regions, as appropriate). Optionally a respective machine-learning system could be trained for each of these upscaling ratios.

Such a machine-learning system is trained by using full resolution target images and reduced resolution input images (e.g. images created by downscaling the target image, or re-rendering the target image at the lower resolution/quality). In embodiments of the present application, the training set may thus comprise target images rendered as if for the foveal region (or field of view region if no foveal rendering) and corresponding input images rendered as if for one or more of the other regions. Typically the machine-learning system is not trained on entire images; instead it is trained on tiles of a fixed size taken from the images. For example a tile may be 16x16 pixels, or 32x32, 64x64, and so on. The target may be a corresponding tile of similar size, but due to it representing a higher resolution version of the image, this target tile may only correspond to a subset of the image seen in the input tile. For example, if the input resolution is 640x480 and the target resolution is 1920x1080, then a 32x32 input tile corresponds to approximately 6.75 times more area in the image than a 32x32 output tile. This allows the machine-learning system to use surrounding pixels of the image in the input to contribute to the upscaling of the portion corresponding to the output tile; for example using information from repeating patterns and textures in the input, or better estimating gradients or curves in chrominance or luminance.

It will be appreciated that the output tile need not be the same size as the input tile, and may be any size up to and including a size corresponding to the same area of the image as the input tile. Meanwhile it will be appreciated that the input tile may represent any suitable proportion of the image, up to and including all the image, if this can be supported by the machine-learning system and the system it is running on.

It will also be appreciated that the use of surrounding pixels of an input image tile to contribute to the upscaling of a portion of that tile corresponding to the output tile can also be used when upscaling according to the other techniques noted herein and is not limited to machine learning.

It will be appreciated that the training images can be any images, but a machine-learning system will perform better if trained on images from the same game as in the footage to be upscaled (and/or a previous game in a series that has a similar look).

Any of these interpolation techniques may also optionally use additional information from other image frames, for example preceding and/or following image frames, from which (for example due to aliasing in the low resolution images) different and complementary information may be determined.

In embodiments of the present application, image information from the original field of view may be reused as the viewpoint moves around the scene (thereby providing higher resolution reference pixels that can subsequently replace or inform the processing of low resolution rendered parts). Hence for example if a user's head moves to the left, the currently central part of the scene will pan to the right and be rendered at a low resolution. However, high resolution data for that part of the scene is available from earlier frames where it was in the centre of view.

Hence optionally frames can include metadata indicating their central direction of view, and when upscaling the peripheral or further peripheral regions for a frame, the system may look to see if and when a given part of such a region was last in central view and obtain high resolution pixel data from that frame.

Alternatively or in addition, the system can build a spherical reference image using data for a given pixel from the last frame in which that pixel was rendered at high resolution; hence in this case the foveal view is treated like a brush, leaving a trail of high resolution pixels from its trailing edges with each frame. The brush paints a high resolution version of the current view as the user looks around the environment. It will be appreciated that the peripheral region (or field of view, if foveal rendering is not used) can also be treated as a brush in a similar manner (with its values overridden by foveal pixels is present) so that the largest surface area of the sphere can be painted with these higher resolution pixels. The same approach can be used with the further transition region, if present. Hence in short, for a given position on the reference sphere, the most recent highest resolution pixel values are stored, being updated as the user continues to look around. These values can also be deleted, for example after a predetermined period or if the user moves position by more than a threshold amount, or the game environment changes by more than a threshold amount.

These pixels can then be used either directly to in-fill pixels in a current upscaling of the further periphery or periphery as appropriate, or may be used as additional input data for any of the techniques described herein. Hence for example, when upscaling the peripheral and further peripheral regions of a current frame, a spherical reference image may comprise high resolution pixels for (for example) 40% of the sphere because the user had recently looked behind themselves and hence encompassed that much of the spherical view at foveal resolution (or field of view resolution) over a succession of 20 or 30 frames. Consequently the upscaler can use high resolution data (for example corresponding in size to the target high resolution tile, or slightly larger) as an input in conjunction with the low resolution data of the current frame being upscaled.

It will be appreciated that a neural network trained on both a current low resolution input and a companion higher resolution input will typically do a better job of matching a high resolution target. In these circumstances the neural network may be trained on companion inputs at several resolutions (e.g. foveal, peripheral and further peripheral resolutions) to learn to accommodate the relatively random distribution of viewing directions of users (which will determine which parts of a reference spherical image can be filled in with higher resolution information). As a refinement of this approach, measurements of the likelihood of direction of view of users during game play can be estimated, and the training of the neural network can be done using companion resolutions selected at frequencies that correspond to this likelihood. Hence for example directly behind the user will rarely be looked at and so the companion input will most often be selected as the lowest resolution data during training (but will differ from the current input since it comes from older frame data, and so may still be complementary) whereas left and right of the frontal view are likely to get high quality data and so will most often be selected as the highest resolution data during training.

Alternatively or in addition, optionally the machine learning system can be trained to upscale the video having been trained on low and higher resolution walkthroughs of at least some of the game environment that may be generated for example by the developer moving through the environment and rendering the image sphere at a target resolution (irrespective of resulting frame rate / time taken, as this is not for the purposes of game play). In this way, the machine learning system is trained specifically on the game at issue, and also using perfect target and input data (full resolution information for the full sphere, and a down sampled version thereof, or a lower resolution render - if this is materially different - generated for example using a script to produce the same in-game progression for both versions of the video), again typically presented in a tiled format to the upscaler.

Other strategies may be employed to assist with the fidelity of the upscaling process. For example, where the sphere is rendered using a cube map, respective machine learning systems may be trained on one or more respective facets of the cube map, thereby specialising in front, back, up, down, left, or right views within the sphere. This can help the machine learning systems tune to the typical resolution data available, and also the typical content (up and down, for example, are likely to be different). Optionally also the machine learning systems for up, and behind, in particular, may be smaller or simpler, if it is assumed that the fidelity of these parts of the sphere are not as essential as other parts.

Hence the recorded video comprising the remaining sphere may in principle have reduced temporal and/or spatial resolutions that are compensated for, at least in part, by parallel or subsequent processing by the games machine and/or a holding/distribution server to interpolate frames and/or upscale them.

The server can then provide the (spatial and/or temporal) up-scaled video images, or indeed the originally uploaded video images if no variant is applied, to one or more viewers (or to a further server that provides this function).

The viewers can then look at the video using an app on their client device, and either track the original user's viewpoint or freely look around, as described elsewhere herein, but with an improved resolution outside the fovea / field of view of the original user compared to the originally recorded images.

### Summary Embodiments

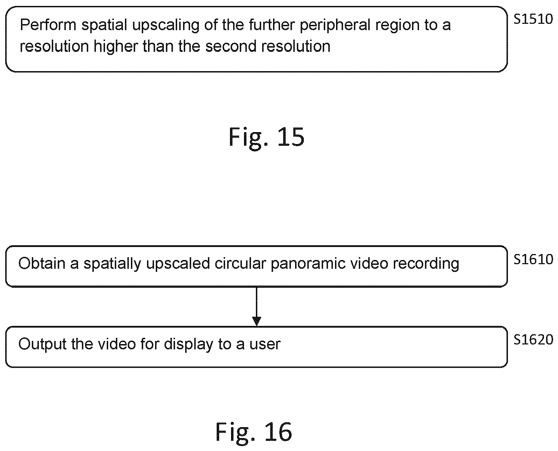

Referring now to Figure 15, in a summary embodiment of the present description a method of video processing for a circular panoramic video recording comprising an original field of view 'FoV' region at a first resolution and a further peripheral region outside the original field of view at a second, lower resolution comprises a step s1510 of performing spatial upscaling of the further peripheral region to a resolution higher than the second resolution, as described elsewhere herein. As noted elsewhere herein, the upscaled resolution may be to any one of a transitional region, original FoV region or optional foveal region. Whilst it is preferable to aim for the resolution of the original FoV region or optional foveal region, a lower resolution may be used (e.g. a transitional resolution) particularly for areas that are considered to be of low interest to users, such as the sky above them (in most games), or based on a viewing heat map by either the original users or viewers of earlier similar material.

It will be apparent to a person skilled in the art that variations in the above method corresponding to operation of the various embodiments of the apparatus as described and claimed herein are considered within the scope of the present invention, including but not limited to that:
- In an instance of the summary embodiment, the original field of view region further comprises a foveal region at a third resolution higher than the first resolution, and the method comprises the step of performing spatial upscaling of the original field of view region at the first resolution to substantially the third resolution, as described elsewhere herein;
- In an instance of the summary embodiment, the circular panoramic video recording comprises at least a first respective transitional region provided between one or more of a foveal region and original field of view region, and the original field of view region and the further peripheral region; the respective transitional region having a resolution in between the resolutions of the two regions it transitions between, as described elsewhere herein;
- In an instance of the summary embodiment, the spatial upscaling is performed by a machine learning system trained on input image data at a lower input resolution from among the recording resolutions and corresponding target image data at a higher output resolution among the recording resolutions; as described elsewhere herein, the upscaled resolution may be to any one of a transitional region, original FoV region or optional foveal region;
- In an instance of the summary embodiment, the method comprises the steps of, for at least a predetermined number of preceding frames, storing the position of at least a subset of image data having a resolution higher than the second resolution in each respective video frame; and when performing spatial upscaling of a given part of a current frame of the circular panoramic video, using image data of one or more preceding frames having the higher resolution at the position of the given part of the current frame as an input, as described elsewhere herein;
- Similarly In an instance of the summary embodiment, the original field of view region further comprises a foveal region at a third resolution higher than the first resolution, and the method comprises the steps of for at least a predetermined number of preceding frames, storing the position of image data of at least the third resolution in each respective video frame, and when performing spatial upscaling of a given part of a current frame of the circular panoramic video, using image data of one or more preceding frames having at least the third resolution at the position of the given part of the current frame as an input, as described elsewhere herein;
- In an instance of the summary embodiment, the method comprises the steps of generating a reference circular panoramic image using at least a subset of image data having a resolution higher than the second resolution in each of a predetermined number of preceding respective video frames, the circular panoramic image thus storing the most recently rendered higher resolution rendered pixels in each direction on the reference circular panoramic image (optionally using recent data of the second resolution where no other data is available); and when performing spatial upscaling of a given part of a current frame of the circular panoramic video, using image data from the corresponding part of the reference circular panoramic image as an input, as described elsewhere herein;
   - In this instance, optionally pixel data for a respectively higher resolution region of a given image frame is stored by the reference circular panoramic image in preference to pixel data for a respectively lower resolution region, as described elsewhere herein;
   - Similarly in this instance, optionally the spatial upscaling is performed by a machine learning system trained on input image data at a lower input resolution from among the recording resolutions together with corresponding input data from the reference circular panoramic image, and corresponding target image data at a higher output resolution among the recording resolutions, as described elsewhere herein;
- In an instance of the summary embodiment, the circular panoramic images are rendered using a cube map, and the spatial upscaling is performed by a plurality of machine learning systems trained on one or more respective facets of the cube map, as described elsewhere herein; and
- In an instance of the summary embodiment, the circular panoramic images are all either cylindrical or spherical, as described elsewhere herein.

Referring now to Figure 16, in a summary embodiment of the present description a video output method comprising the following steps.

A first step s1610 of obtaining a circular panoramic video recording spatially upscaled according to any preceding claim, as described elsewhere herein. This video may be obtained from the device that performed the upscaling or a server to which it was uploaded, or via a stream, or alternatively may be obtained by performing the upscaling (for example at a broadcast server, or at a client device).

A second step s1620 of outputting the video for display to a user, as described elsewhere herein. Typically this will be output to a port of the signal source 80 (e.g. the user's client device) for viewing by an HMD (or in the case of a client device such as a mobile phone or handheld console, potentially display by the client device itself, possibly mounted in an HMD frame).

Optionally in an instance of the summary embodiment, the circular panoramic video recording comprises a record of the original field of view region of each frame; and during playback, a visual indication of where the original field of view was within the circular panoramic video is displayed when a user's own field of view diverges from the original field of view by a threshold amount (for example an arrow towards the viewpoint, or a glow at the relevant margin(s) of the current image), as described elsewhere herein.

It will be appreciated that the above methods may be carried out on conventional hardware suitably adapted as applicable by software instruction or by the inclusion or substitution of dedicated hardware. Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, in a summary embodiment of the present description, a video processing system (such as processing system 910, for example a video games console such as for example the PlayStation 5 ^{®}, typically in conjunction with a head mounted display 810) is adapted to perform spatial upscaling for a circular panoramic video recording comprising an original field of view region at a first resolution and a further peripheral region outside the original field of view at a second, lower resolution, and comprises a spatial upscaling processor (for example CPU 911 and/or GPU 912) adapted (for example by suitable software instruction) to spatially upscale the further peripheral region to a resolution higher than the second resolution.

It will be apparent to a person skilled in the art that variations in the above video processing system corresponding to the various methods and techniques as described and claimed herein are considered within the scope of the present invention.

Similarly, in a summary embodiment of the present description, a video playback device (such as processing system 910, for example a video games console such as for example the PlayStation 5 ^{®}, typically in conjunction with a head mounted display 810) comprises a playback processor (for example CPU 911 and/or GPU 912) adapted (for example by suitable software instruction) to obtain a circular panoramic video recording spatially upscaled according to any preceding claim; and a graphics processor (for example CPU 911 and/or GPU 912) adapted (for example by suitable software instruction) to output the video for display to a user.

Again, it will be apparent to a person skilled in the art that variations in the above video processing system corresponding to the various methods and techniques as described and claimed herein are considered within the scope of the present invention.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A video processing method for a circular panoramic video recording comprising an original field of view region at a first resolution and a further peripheral region outside the original field of view at a second, lower resolution, the method comprising the step of:
performing spatial upscaling of the further peripheral region to a resolution higher than the second resolution.

2. A video processing method according to claim 1, in which the spatial upscaling is to a resolution substantially equal to that of the first resolution.

3. A video processing method according to any preceding claim, in which the original field of view region further comprises a foveal region at a third resolution higher than the first resolution, and the method comprises the step of:
performing spatial upscaling of the original field of view region at the first resolution to substantially the third resolution.

4. A video processing method according to any preceding claim, in which
the circular panoramic video recording comprises at least a first respective transitional region provided between one or more of a foveal region and original field of view region, and the original field of view region and the further peripheral region; and
the respective transitional region having a resolution in between the resolutions of the two regions it transitions between.

5. A video processing method according to any preceding claim, in which the spatial upscaling is performed by a machine learning system trained on input image data at a lower input resolution from among the recording resolutions and corresponding target image data at a higher output resolution among the recording resolutions.

6. A video processing method according to any preceding claim, comprising the steps of:
for at least a predetermined number of preceding frames, storing the position of at least a subset of image data having a resolution higher than the second resolution in each respective video frame; and
when performing spatial upscaling of a given part of a current frame of the circular panoramic video, using image data of one or more preceding frames having the higher resolution at the position of the given part of the current frame as an input.

7. A video processing method according any preceding claim, in which the original field of view region further comprises a foveal region at a third resolution higher than the first resolution, and the method comprises the steps of:
for at least a predetermined number of preceding frames, storing the position of image data of at least the third resolution in each respective video frame; and
when performing spatial upscaling of a given part of a current frame of the circular panoramic video, using image data of one or more preceding frames having at least the third resolution at the position of the given part of the current frame as an input.

8. A video processing method according to any preceding claim, comprising the steps of:
generating a reference circular panoramic image using at least a subset of image data having a resolution higher than the second resolution in each of a predetermined number of preceding respective video frames, the circular panoramic image thus storing the most recently rendered higher resolution rendered pixels in each direction on the reference circular panoramic image; and
when performing spatial upscaling of a given part of a current frame of the circular panoramic video, using image data from the corresponding part of the reference circular panoramic image as an input.

9. A video processing method according to claim 8, in which the spatial upscaling is performed by a machine learning system trained on input image data at a lower input resolution from among the recording resolutions together with corresponding input data from the reference circular panoramic image, and corresponding target image data at a higher output resolution among the recording resolutions.

10. A video processing method according to any preceding claim, in which the circular panoramic images are rendered using a cube map, and the spatial upscaling is performed by a plurality of machine learning systems trained on one or more respective facets of the cube map.

11. A video output method comprising the steps of:
obtaining a circular panoramic video recording spatially upscaled according to any preceding claim; and
outputting the video for display to a user.

12. A video output method according to claim 11, in which:
the circular panoramic video recording comprises a record of the original field of view region of each frame; and
during playback, a visual indication of where the original field of view was within the circular panoramic video is displayed when a user's own field of view diverges from the original field of view by a threshold amount.

13. A computer program comprising computer executable instructions adapted to cause a computer system to perform the method of any one of the preceding claims.

14. A video processor adapted to perform spatial upscaling for a circular panoramic video recording comprising an original field of view region at a first resolution and a further peripheral region outside the original field of view at a second, lower resolution, comprising:
a spatial upscaling processor adapted to spatially upscale the further peripheral region to a resolution higher than the second resolution.

15. A video playback device comprising
a playback processor adapted to obtain a circular panoramic video recording spatially upscaled according to any preceding claim; and
a graphics processor adapted to output the video for display to a user.
